(19) Europäisches Patentamt
European Patent Office
Office européen des brevets

(11) **EP 2 363 724 A1**

(12) **EUROPEAN PATENT APPLICATION**

(43) Date of publication:
**07.09.2011 Bulletin 2011/36**

(51) Int Cl.:
*G01S 3/783* (2006.01)    *G01S 3/785* (2006.01)
*G01S 7/486* (2006.01)    *G01S 7/481* (2006.01)

(21) Application number: **10250226.7**

(22) Date of filing: **11.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **MBDA UK Limited**
**Stevenage**
**Hertfordshire SG1 2DA (GB)**

(72) Inventor: **The designation of the inventor has not yet been filed**

(74) Representative: **BAE SYSTEMS plc**
**Group IP Department et al**
**P.O. Box 87**
**Warwick House**
**Farnborough Aerospace Centre**
**Farnborough**
**Hampshire GU14 6YU (GB)**

(54) **An optical detector**

(57) A method of detecting the direction of incidence of an incoming modulated continuous wave light signal in a field of view of a detector comprising introducing a phase shift into the modulated light signal received by at least one portion of the field of view relative to the modulated light signal received by at least one other portion of the field of view and utilising the phase shift in determining the direction of incidence.

FIG. 2

EP 2 363 724 A1

**Description**

This invention relates to the field of optical detectors. The invention relates in particular to detectors for detecting the direction from which an optical signal is incident. The invention relates especially, although not exclusively, to a detector for use in an alignment system in which the position of a spot of incident light on the detector is used to infer alignment.

Quadrant detectors, in association with appropriate optical components, are used to detect the direction from which an optical signal is incident, relative to the detector. Quadrant detectors typically comprise four substantially independent quadrant-shaped photodiodes, which together form a circular detector. Incident light, typically laser light, is defocused on the detector, forming a spot on one or more of the photodiodes (the laser spot is deliberately defocused on the photodetector to allow the various portions of the spot to be measured more accurately). In common-electrode monolithic detectors, each photodiode is connected to an independent transresistance current-to-voltage converter, which provides a signal proportional to the intensity of light falling on that photodiode. By calculating the sum and the difference of the signals from each of the photodiodes, the vertical and horizontal displacement of the spot on the detector can be determined. That information allows calculation of the angular direction from which the light is incident, relative to the plane of the detector and its central orthogonal axis.

The field of view of such a detector is generally limited by the size of the photodetector: to increase the field of view, one must increase the photodetector size. However, increasing the size of a photodiode increases its capacitance, which in turn decreases its bandwidth and increases its noise; in practice, that limits high-speed photodetectors to a relatively small size for the detection of short optical pulses, and hence a relatively small field of view.

In an alternative approach to detecting the direction of incidence, much bigger detectors are known that are made from an array of photodetectors, many more than four. However, such systems have high data-processing requirements, and may suffer from noise problems.

In prior-art systems, there is thus a trade-off between field of view and speed of response on the one hand, and complexity on the other.

Furthermore, in such systems, the gain of the photodetector's transresistance amplifiers typically must initially be kept high, to maximise sensitivity, although there is then the risk that the photodetector will saturate if the incident pulse energy is large.

Conventional photodetectors are made of silicon, and are often used at an operating wavelength of about 1 micron. Operation around 1.5 microns would be preferable, for eye safety. Photodetectors used in telecoms operate at around 1.5 microns, but they are relatively small for high bandwidth operation. Large high-speed detectors operating around 1.5 microns are not generally commercially available. Sensitivity can be improved by using avalanche detectors, but that increases the cost of the system.

In some applications, the power received by the detector scales with the second or fourth power of the distance to a target. Consequently, the intensity increases very rapidly as the target is approached. That can lead to problems if the photodetector saturates

It would be advantageous to provide a system that has an enhanced field of view, whilst avoiding one or more of the aforementioned disadvantages. At least in its preferred embodiments the present invention may achieve this,

The term "light" as used herein means electromagnetic radiation in the optical or near-optical region, i.e. of wavelength between about180nm and 1 mm.

As the skilled person will know, the "optical path length" of a device (e.g. a waveguide) is the path length in a vacuum that provides the same delay to a light signal propagating freely in the vacuum as the delay provided to a light signal propagating in the device. Thus, for example, the optical path length of a path in a vacuum is equal to the physical length of the path, the optical path length of a path in a material of constant refractive index n is n times the physical length of the path, and the optical path length of a path in a material having a refractive index n($l$) that varies along the path is $\int_{0}^{L} n(l) \cdot dl$, where L is the length of the path. The optical path length of a given waveguide may thus be calculated from its known average effective refractive index, or measured by measuring the time taken by a light signal to pass along a known length of the waveguide. In this document, references to the "length" of a waveguide, or of waveguides being "longer" or "shorter" should be understood as references to optical lengths (rather than physical lengths), unless otherwise indicated.

A first aspect of the invention provides a method of detecting the direction of incidence of an incoming modulated light signal in a field of view of a detector comprising introducing a phase shift into the modulated light signal received by at least one portion of the field of view relative to the modulated light signal received by at least one other portion of the field of view and utilising the phase shift in determining the direction of incidence.

A second aspect provides apparatus for detecting the direction of incidence of an incoming modulated light signal in a field of view of a detector comprising means for introducing a phase shift into the modulated light signal received by at least one portion of the field of view relative to the modulated light signal received by at least one other portion of the field of view, and incidence determining means for utilising the phase shift in determining the direction of incidence.

Preferably the light signal is a continuous wave signal.

By means of the invention, the electronic processing of the outputs of photodetectors which is required in prior art devices can be reduced. Instead, by using a modulated continuous wave light signal, phase information in the signal can be manipulated and utilised in the optical domain to provide an indication of the direction of incidence. In preferred embodiments, sum and difference optical signals can be produced, and the outputs of the photodetectors can be made directly representative of those quantities.

In the preferred embodiment, light is not directed using free-space or bulk optics to photodetectors arranged adjacent to the sensing area of the detector, as is the case in prior art devices; rather, the photodetectors are remote from the sensing area, and light is guided to them using the first plurality of waveguides. That enables the photodetector (s) to be located in a different environment from that of the sensing area, which may be advantageous where the sensing area must be sited in an exposed position, or if the photodetector(s) require special environmental conditions (e.g. cooling).

Also, because the sensing area is not the photodetector itself, the sensing area need not function as a capacitor, and so it can be made physically larger than prior art devices.

In a preferred embodiment, the at least one portion and the at least one other portion of the field of view comprise quadrants around a boresight of the detector.

The means for introducing a phase shift may comprise first and second waveguides of different optical lengths through which the light signals from the one and the other portions respectively are passed.

The incidence determining means may comprise at least one optical splitter/combiner.

A said splitter combiner may be arranged to combine the light signals from an adjacent pair of quadrants constituting a said portion and to provide one output to a said first waveguide and another output to a said second waveguide.

A further splitter/combiner may be connected to a said first waveguide from a said one portion and to a said second waveguide from a said another portion.

There may be means for determining the amplitude of the incoming signal and for controlling in response thereto the gain of signal processing employed in determining the said direction of incidence.

The amplitude determining means may comprise waveguides of a length different (longer or shorter) from that of the first and second waveguides for conducting in-phase light signals from the one and the other portions to a photodetector.

A further aspect of the invention provides an alignment system comprising means for illuminating an object with continuous-wave modulated light, and apparatus as set fourth above for detecting the direction of incidence thereon of said light reflected from the object. The system may be a target identification and acquisition system (e.g. one employing a laser designator) in which the incidence-detecting apparatus is embodied in a missile or other munition.

The invention will now be described merely by way of example with reference to the accompanying drawings, wherein

Figure 1, taken from US4092531, shows a prior-art quadrant detector, and

Figure 2 shows an apparatus according to the invention.

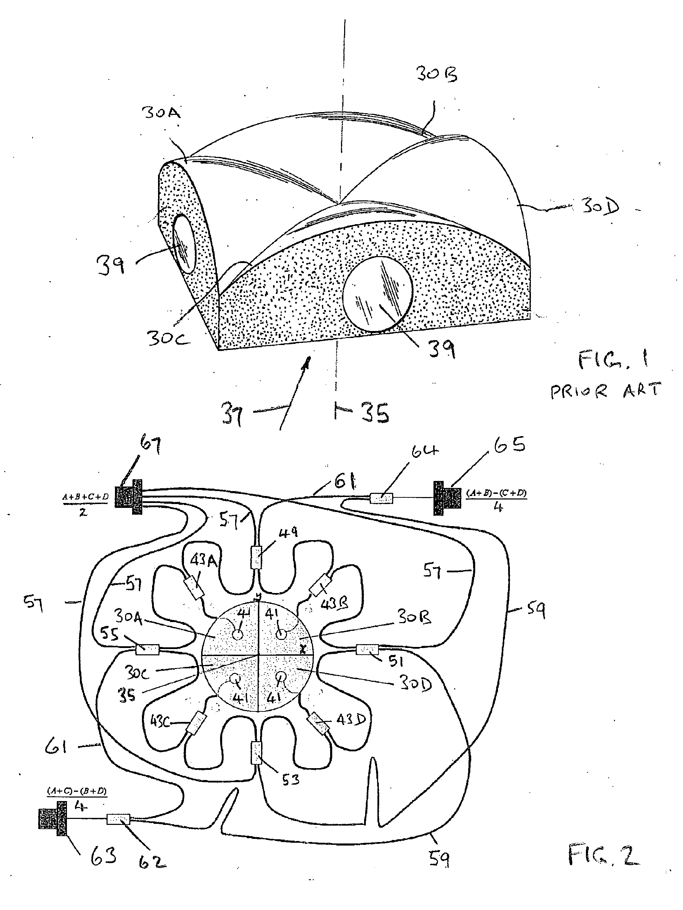

Referring to Figure 1, a quadrant detector comprises four part-spherical reflective surfaces 30A-D formed on a glass substrate. The surfaces converge to a cusp (not visible in the figure) on the boresight axis 35 of the substrate.

An incoming light signal 37 is captured by a objective lens (not shown) and directed through the glass substrate to the spherical surfaces 30A-D where, depending on its angle of incidence, it is reflected in various proportions to four photodetectors 39 set orthogonally to the boresight. The output of each photodetector is functionally related to (preferably proportional to) the amplitude or brightness of the portion of the incoming light signal incident on its respective reflective surface 30A, B, C, or D. The outputs of the photodetectors are processed electronically to provide difference signals from which the direction of the incoming signal in elevation and azimuth can be extracted. We use the terms elevation and azimuth broadly to mean the components of the direction of incidence in a cartesian frame of reference (X and Y axes) centred on the boresight of the detector.

In a preferred form of the present invention, the incoming light signal has been amplitude-modulated. For example it may be amplitude-modulated coherent (laser) light which has been reflected off a target. Thus in a preferred embodiment, the invention is employed in a detector for use at a range of up to about 200m. For unambiguous resolution of the angle of incidence of the modulated light from the target the modulation frequency must be equivalent to a wavelength of at least twice this range i.e. 400m or more. The modulation wavelength used in this example is 600m, corresponding to a modulation frequency of 500KHz.

In Figure 2 the four photodetectors 39 each are replaced by a respective optical fibre or waveguide 41. The end of each optical fibre is disposed in the plane of the photodetector it replaces so as to receive light reflected to it from the respective surface 30A-D. Each optical fibre 41 is of the same optical length and leads to a respective 50/50 splitter/combiner 43 A-D where it is divided into two parts. Each part of the split signal is taken by an optical fibre 45 to one of four further 50/50 splitter/combiners 49, 51, 53, 55, where it is combined with a similarly-split signal from the splitter 43 of an adjacent quadrant. Again the optical fibres 45 are of equal optical length. The splitter/combiners 49 and 51 each provide two equal outputs to respective optical fibres 57 and either 59 or 61, It can be seen that the outputs from the splitter/combiners 49, 51, 53, 55 (and thus the inputs to optical fibres 57, 59, 61) are respectively (A+B)/4, (B+D)/4, (C+D)/4 and (A+C)/4, where A, B, C and D are the signals originating from quadrants 30A-D respectively. These signals are in phase with each other at the modulation frequency.

The optical fibre 59 from splitter/combiner 51 and the optical fibre 61 from splitter/combiner 55 are taken via a combiner 62 to an azimuth photodetector 63. The optical fibre 59 from splitter combiner 53 and the optical fibre 61 from splitter /combiner 49 are taken via a combiner 64 to an elevation photodetector 65.

The optical fibres 59 are of equal optical length, and are λ/2 longer than the optical fibres 61 (which also are of equal optical length), where λ is the modulation wavelength of the signal. The additional optical length of λ/2 delays the light signals passing through the fibres 59 by an amount, equivalent to a phase-shift of 180°. This effectively reverses the algebraic sign of the signals in fibres 59, and so the combined signals delivered from combiners 62, 64 to detectors 63, 65 are

$$\frac{(A+C)-(B+D)}{4} \text{ and } \frac{(A+B)-(C+D)}{4}$$

i.e. the azimuthal and elevational components of the direction of incidence of the light signal on the detector, relative to x and y axes centred on the detector boresight 35 as shown in Figure 2.

Thus the optical signals delivered to the photodetectors 63, 65 already have been processed to yield azimuth and elevation signals, and require further processing only as necessary for the particular application for which the apparatus is intended to be used.

The optical fibres 57 are all of the same length and are significantly shorter than both the fibres 59 and 61. They deliver an in-phase sum signal (A+B+C+D)/2 to a photodetector 67. This signal provides an indication of the amplitude (brightness) of the incident light signal, and can be utilised to normalise (scale) the outputs of the photodetectors 63, 65. It will be appreciated that it is the relative values of the outputs of photodetectors 63, 65 which are of interest, and not their absolute values. The output of photodetector 67 also can be utilised for controlling the gain of circuitry to which the outputs of photodetectors 63, 65 are supplied. This can be useful when the incoming signal is weak, or alternatively when is too strong, as may be the case for the terminal phase of the flight of a laser-guided munition to its target. For example, the apparatus may comprise an adjustable gain control circuit, the circuit being arranged so that the gain of the photodetectors 63, 65 is adjusted according to the amplitude,. Thus, if the signal amplitude is too large, the adjustable gain control circuit may be adjusted to attenuate the signal from the photodetectors 63, 65. Alternatively, the signal may be switched to a different, less sensitive, photodetector, or to a separate lower-gain amplifier, or to an optical or other attenuator, if the detectors 63, 65 otherwise would be saturated. Similarly, if the amplitude is too small, the adjustable gain control circuit may be adjusted to boost the signal from the detectors 63, 65. Alternatively, the signal may be switched to a different, more sensitive, photodetector, or to a separate, higher-gain amplifier. In yet another alternative, the gain adjustments may be achieved by operating on the light signals before they reach the detectors 63, 65, 67, for example by switching-in in-line fibre attenuators or amplifiers as required. This can have the advantage of being simpler to implement than gain control during electrical signal processing.

In the described embodiment, the waveguides are in the form of optical fibres. Optical fibres have the advantage that they are generally relatively cheap, and are available in very long lengths. Either a single fibre or a bundle of fibres (preferably jacketed) may be used. When a bundle of fibres is used, the fibres may advantageously be distributed so as that each views a respective different part of the surface of the quadrant 30A, B, C or D. The fibres from each quadrant are brought together before the splitter 43A, B, C or D so as to provide a single signal to it. Jacketed optical fibres can be relatively bulky, and in some embodiments alternatives, for example planar waveguides, may be used.

Whilst the present invention has been described and illustrated with reference to particular embodiments, it will be appreciated by those of ordinary skill in the art that the invention lends itself to many different variations not specifically illustrated herein.

For example, a further improvement in resolution can be achieved by sub-dividing each quadrant into further sub-quadrants, and applying the invention to those sub-quadrants. However, this refinement will require significantly more complex signal processing.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may be absent in other embodiments.

**Claims**

1. A method of detecting the direction of incidence of an incoming modulated light signal in a field of view of a detector comprising introducing a phase shift into the modulated light signal received by at least one portion of the field of view relative to the modulated light signal received by at least one other portion of the field of view and utilising the phase shift in determining the direction of incidence.

2. The method of claim 1 wherein the at least one portion and the at least one other portion of the field of view comprise quadrants around a boresight of the detector.

3. The method of claim 2 wherein the phase shift is 180° at the modulation frequency.

4. The method of any preceding claim wherein the phase shift is introduced by passing the modulated light signals from the said one and other portions through respective waveguides of different optical lengths.

5. The method of any preceding claim comprising sensing the amplitude of the incoming signal and controlling in response thereto the gain of signal processing employed in determining the direction of incidence.

6. Apparatus for detecting the direction of incidence of an incoming modulated light signal in a field of view of a detector comprising means for introducing a phase shift into the modulated light signal received by at least one portion of the field of view relative to the modulated light signal received by at least one other portion of the field of view, and incidence determining means for utilising the phase shift in determining the direction of incidence.

7. The apparatus of claim 6 wherein the at least one portion and the at least one other portion of the field of view comprise quadrants around a boresight of the detector.

8. The apparatus of claim 7 wherein the phase shift is 180° at the modulation frequency.

9. The apparatus of any of claims 6 to 8 wherein the means for introducing a phase shift comprises first and second waveguides of different optical lengths through which the light signals from the one end the other portions respectively are passed.

10. The apparatus of any of claims 6 to 9 wherein the incidence determining means comprises at least one optical splitter/combiner.

11. The apparatus of claims 8, 9 and 10 wherein a said splitter/combiner is arranged to combine the light signals from an adjacent pair of quadrants constituting a said portion and to provide one output to a said first waveguide and another output to a said second waveguide.

12. The apparatus of claim 11 comprising a further splitter/combiner connected to a said first waveguide from a said one portion and to a said second waveguide from a said another portion.

13. The apparatus of any of claims 6 to 12 comprising means for determining the amplitude of the incoming signal and for controlling in response thereto the gain of signal processing employed in determining the said direction of incidence.

14. The apparatus of claim 13 when dependent from claim 9 wherein the amplitude determining means comprises waveguides of a length different from that of the first and second waveguides for delivering in-phase light signals from the one and the other portions to a photodetector.

15. An alignment system comprising means for illuminating an object with modulated light, and apparatus according to any of claims 6 to 15 for detecting the direction of incidence thereon of said light reflected from the object.

FIG. 1
PRIOR ART

$\frac{A+B+C+D}{2}$

$\frac{(A+B)-(C+D)}{4}$

$\frac{(A+C)-(B+D)}{4}$

FIG. 2

Europäisches
Patentamt

European
Patent Office

Office européen
des brevets

**EUROPEAN SEARCH REPORT**

Application Number

EP 10 25 0226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | GB 2 409 514 A (BAE SYSTEMS PLC [GB])<br>29 June 2005 (2005-06-29)<br>* the whole document * | 1-3,5-8,<br>13<br>5,13,15<br>4,9-12,<br>14 | INV.<br>G01S3/783<br>G01S3/785<br>G01S7/486<br>G01S7/481 |
| | ----- | | |
| Y | US 3 657 547 A (MANSFIELD GERALD R)<br>18 April 1972 (1972-04-18)<br>* column 2, line 47 - line 50; figure 1 * | 5,13 | |
| | ----- | | |
| Y | GB 1 552 369 A (MARTIN MARIETTA CORP)<br>12 September 1979 (1979-09-12)<br>* figure 1 * | 5,13 | |
| | ----- | | |
| Y | WO 99/41622 A1 (HOLLANDSE SIGNAALAPPARATEN BV [NL]; ROTGANS PETRUS JOHANNES [NL])<br>19 August 1999 (1999-08-19)<br>* page 6, lines 11-15, 31 - page 7, line 5; figure 2 * | 15 | |
| | ----- | | |

TECHNICAL FIELDS
SEARCHED      (IPC)

G01S

The present search report has been drawn up for all claims

| Place of search | Date of completion of the search | Examiner |
|---|---|---|
| Munich | 6 April 2011 | Beer, Mark |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**

EP 10 25 0226

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2011

| Patent document cited in search report | | Publication date | Patent family member(s) | | Publication date |
|---|---|---|---|---|---|
| GB 2409514 | A | 29-06-2005 | CA | 2390560 A1 | 17-01-2006 |
| | | | DE | 10236895 A1 | 31-05-2007 |
| | | | ES | 2262369 A1 | 16-11-2006 |
| | | | FR | 2877769 A1 | 12-05-2006 |
| | | | US | 2006266927 A1 | 30-11-2006 |
| US 3657547 | A | 18-04-1972 | NONE | | |
| GB 1552369 | A | 12-09-1979 | DE | 2659204 A1 | 29-06-1978 |
| | | | FR | 2377728 A1 | 11-08-1978 |
| | | | NL | 7700102 A | 11-07-1978 |
| WO 9941622 | A1 | 19-08-1999 | AU | 2923799 A | 30-08-1999 |
| | | | CA | 2319642 A1 | 19-08-1999 |
| | | | DE | 69927242 D1 | 20-10-2005 |
| | | | DE | 69927242 T2 | 29-06-2006 |
| | | | EP | 1055134 A1 | 29-11-2000 |
| | | | IL | 137408 A | 20-11-2005 |
| | | | JP | 2002503815 T | 05-02-2002 |
| | | | NL | 1008276 C2 | 12-08-1999 |
| | | | US | 6466159 B1 | 15-10-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4092531 A